# EUROPEAN PATENT APPLICATION

(11) **EP 3 808 917 A1**
(43) Date of publication of application: **21.04.2021**
(21) Application number: 20202291.9
(22) Date of filing: 16.10.2020
(51) Int. Cl.: E04F 13/04, E04B 2/72, H02G 3/38, F21V 21/02, E04B 2/74, E04F 19/02

(54) **WALL PROFILE WITH LIGHTING MEANS**

(30) Priority: 17.10.2019 IT 201900019142
(71) Applicant: Bonetti, Stefano, 37010 Costermano (VR) (IT)
(72) Inventor: Bonetti, Stefano, 37010 Costermano (VR) (IT)
(74) Representative: Fisauli, Beatrice A. M.

(57) **Abstract**

Wall profile (10) has a central U-shaped body (16) for housing LED strips or similar and at least one wing (12) extending transversely from the end of one leg (24) of the U-shaped body via a beading (30).

## Description

This invention generally refers to a wall profile. More specifically, it is a profile designed to be mounted on walls, such as plasterboard walls or brick walls, in order to mount lights or other objects.

As is well known, aluminum profiles are usually used for the installation of LED lights on plasterboard walls. When fixing these profiles to the wall, the rear part of the plasterboard wall must be left open, i.e. the rear plasterboard sheet must not be mounted, in order to be able to bracket and screw the profiles on the back of the front sheets.

This operation can only be carried out during the construction of a new wall, having already decided in advance both the model of the LED light and its positioning, with the intervention substantially at the same time of both the operator who mounts the plasterboard and the electrician.

It is necessary, in fact, to first mount a part of the plasterboard wall with the intervention of a first operator, then fix the LED lights with the relative power cables by an electrician, and finally, shave the wall with a new intervention of the first operator.

Similar, if not more complex, problems arise when LED lights have to be mounted on existing plasterboard or brick walls.

Wall profiles are known from patent documents DE 195 40 924 A1, DE 20 2012 102902 U1, DE 20 2014 102549 U1, WO 2012/101311.

An aim of this invention is to offer a wall profile suitable for the attachment of LED lights or other similar items, a profile that overcomes the problems of known technology.

Another aim of the invention is to provide a profile that can be mounted on a plasterboard wall in a practical and fast way.

A further aim of the invention is to provide a wall profile that can be mounted independently of the type of LED lights to be mounted and without the need for an electrician to intervene before the wall is finished.

These and other aims are achieved, according to the invention, by a wall profile that can receive LED lights or other objects and be fixed to a wall, which includes a first side wing joined to a central body with an inverted U-shaped shape, so as to obtain a housing for LED lights or other similar objects.

Through this configuration, the first side wing can be fixed to a plasterboard or brick wall slab, and the central body can be received in a seat appropriately obtained between two plasterboard wall slabs, or obtained in the brick wall.

In order to guarantee good stability to the profile, without any unwanted breakage, even during assembly, the central body is connected to the first side wing by means of a first ripple.

In particular, the profile according to the invention is characterised by the fact that the first ripple is in relief with respect to the first side wing, so that the shaving is at the level of the same ripple, which also acts as a barrier for the shaving layer.

Furthermore, for easy adhesion of the profile to the wall, the first holes can be drilled in the first side wing.

Advantageously, in order to ensure better fastening of the profile to the plasterboard wall, a second side wing can also be included and is joined to the central body on the opposite side with respect to the first side wing.

In order to guarantee a good stability of the profile, without any unwanted breakage, even during assembly, the central body is connected to the second side wing by means of a second ripple.

In addition, the second ripple can be in relief with respect to the second side wing, so that the shaving is at the level of the same ripple, which also acts as a barrier for the shaving layer.

In addition, for easy adhesion of the profile to the wall, second holes can be drilled in the second side wing.

In this way, when the wall is shaved, the first side wing and the second side wing disappear below the shaving layer and the same shaving is optimally fixed to the wall below the same side wings.

The central body can include a first vertical lamina, a horizontal lamina and a second vertical lamina which are integral to each other and among which the LED lights or other similar and/or related objects can be placed.

If the seat obtained in the wall has a parallelepiped shape, the first vertical lamina and the second vertical lamina can be orthogonal to the horizontal lamina.

Alternatively, in the case of a different shape, the first vertical lamina and the second vertical lamina can be inclined with respect to the horizontal lamina.

Further features and details may be better understood from the following description, given by way of a non-exhaustive example, as well as from the attached drawing, wherein:

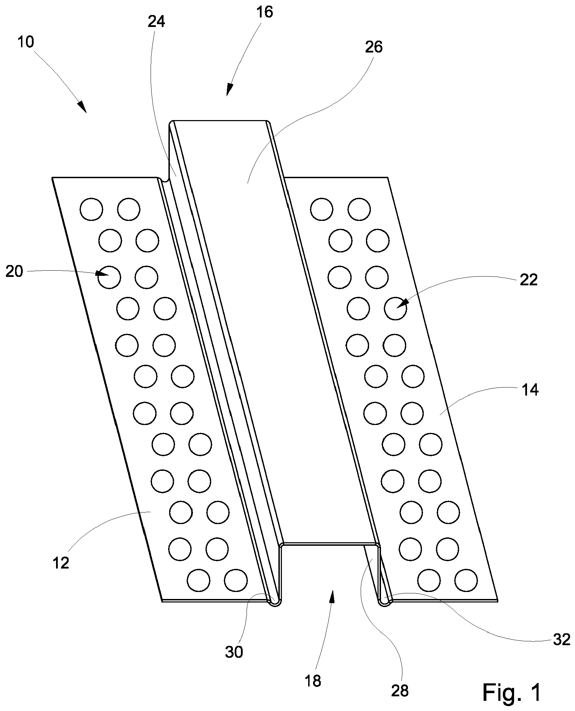

Figure 1 is an axonometric top view of a profile according to the invention.

With reference to Figure 1, a wall profile according to the invention, on which LED lights can be mounted, is denoted by reference number 10.

Profile 10 is mounted on a wall which is then shaved so that it is substantially embedded in the wall and is only visible for the portion used to receive the LED lights.

Profile 10 includes, in a single body, a first side wing 12 and a second side wing 14 joined together by a central body 16 having an inverted U-shaped shape, so as to have a seat 18 for LED lights or any other similar objects.

The first side wing 12 has holes 20 (of which only one is shown in Figure 1) and similarly the second side wing 14 has holes 22 (of which only one is shown in Figure 1).

The central body 16 includes a first vertical lamina 24, a horizontal lamina 26 and a second vertical lamina 28, joined together.

Furthermore, the central body 16 is connected on one side to the first side wing 12 through a first ripple 30 and on the other side to the second side wing 14 through a second ripple 32.

The first ripple 30 and the second ripple 32 are in relief with respect to the first side wing 12 and the second side wing 14, i.e. they protrude towards the outside of the wall.

In this way, the ripples 30, 32 act as a barrier for the shaving layer and, once profile 10 is mounted on the wall, remain at the same shaving level.

Profile 10 can be fixed to a plasterboard wall under construction by creating the appropriate space between two plasterboards and fixing the same profile 10 in the space obtained.

The first holes 20 and the second holes 22 are used to make profile 10 adhere to the plasterboard slabs and to facilitate the grouting and shaving phases of the wall. In other words, through the holes 20, 22 the shaving layer is permanently joined to the wall below profile 10.

Alternatively, profile 10, according to the invention, can be fixed to an already existing wall, in which a cavity of the same size is created at the LED light housing 18. Once the profile has been placed in the prearranged cavity, the finishing of the wall takes place in order to hide the side wings 12, 14.

The electrician can operate once the work of the operator who mounts the plasterboard or the work of the mason who has prepared the profile on the wall has been completed.

According to a further form of realization of the invention, a profile can include a single side wing, possibly perforated, combined with a central body similar to the central body 16 previously described. In this way, the profile configured in this way is fixed to a single slab, guaranteeing in any case the obtaining of a seat in which to place the LED light.

Further variants can also be envisaged, to be considered included in the scope of the invention.

For example, the side wings can be of different widths. Even the holes in them can have different layouts and dimensions in the two wings.

In addition, the horizontal foil may have different widths, depending on the LED lights to be mounted and the lighting effect to be obtained.

The profile according to the invention can also have a different angular arrangement of the first and second wings compared to the first vertical lamina and the second vertical lamina. In other words, the first vertical lamina can be arranged at an angle with respect to the first wing and the second vertical lamina can have a similar arrangement with respect to the second wing.

## Claims

1. Profile (10) for walls suitable to receive LED lights or other objects, and to be fixed to a wall before shaving the same wall, which includes a first side wing (12) joined to a central body (16) having an inverted U shape, so as to obtain a seat (18) for LED lights or other similar objects; in which the central body (16) is connected to the first side wing (12) by a first ripple (30); **characterised by** the fact that the first ripple (30) is in relief with respect to the first side wing (12) in order to act as a block for the shaving layer.

2. Profile (10) according to the preceding claim, wherein the first side wing (12) has first holes (20).

3. Profile (10) according to one of the preceding claims, wherein a second side wing (14) is included together with the central body (16) on the opposite side of the first side wing (12).

4. Profile (10) according to the preceding claim, wherein the central body (16) is connected through a second ripple (32) to the second side wing (14) .

5. Profile (10) according to the preceding claim, wherein the second ripple (32) is in relief with respect to the second side wing (14) in order to act as a block for the shaving layer.

6. Profile (10) according to one of claims 3 to 5, wherein the second side wing (14) has holes (22).

7. Profile (10) according to one of the preceding claims, wherein the central body (16) comprises a first vertical lamina (24), a horizontal lamina (26) and a second vertical lamina (28) which are integral to each other..

8. Profile (10) according to the preceding claim, wherein the first vertical lamina (24) and the second vertical lamina (28) are orthogonal to the horizontal lamina (26).

9. Profile (10) according to claim 7, wherein the first vertical sheet (24) and the second vertical sheet (28) are inclined with respect to the horizontal sheet (26).
